# EUROPÄISCHE PATENTSCHRIFT

(11) **EP 3 925 026 B1**
(45) Veröffentlichungstag und Bekanntmachung des Hinweises auf die Patenterteilung: **07.06.2023**
(21) Anmeldenummer: 20705644.1
(22) Anmeldetag: 11.02.2020
(51) Int. Cl.: H01M 8/04228, H01M 8/04303, H01M 8/04955, H01M 8/1018, H01M 8/10

(54) **VERFAHREN ZUM ABSTELLEN EINES BRENNSTOFFZELLENSYSTEMS**
METHOD FOR SHUTTING DOWN A FUEL CELL SYSTEM
PROCÉDÉ POUR LA MISE À L'ARRÊT D'UN SYSTÈME DE PILE À COMBUSTIBLE

(30) Priorität: 27.02.2019 DE 102019001388
(43) Veröffentlichungstag der Anmeldung: 22.12.2021
(73) Patentinhaber: cellcentric GmbH & Co. KG, 73230 Kirchheim unter Teck (DE)
(72) Erfinder: ERBACH, Simon, 60598 Frankfurt (DE)
(74) Vertreter: Platzöder, Michael Christian
(86) Internationale Anmeldenummer: PCT/EP2020/053489
(87) Internationale Veröffentlichungsnummer: WO 2020/173698

(56) Entgegenhaltungen:
- DE-A1-102005 038 927
- DE-A1-102011 083 327
- DE-A1-102013 210 098
- DE-A1-102018 008 794

## Beschreibung

Die Erfindung betrifft ein Verfahren zum Abstellen eines Brennstoffzellensystems nach der im Oberbegriff von Anspruch 1 näher definierten Art.

Aus dem allgemeinen Stand der Technik ist es bekannt, dass das Abstellen von Brennstoffzellensystemen typischerweise mit Mechanismen einhergeht, welche die Lebensdauer der Brennstoffzellensysteme nachteilig beeinflussen. Im Wesentlichen geht es darum, dass eine Sauerstoff-Wasserstoff-Front über die aktive Fläche der Brennstoffzelle läuft, und dass es dadurch zu einer Oxidation bzw. Korrosion von Kohlenstoff kommt. Dieser dient unter anderem als Träger für die notwendigen Katalysatoren wie beispielsweise Platin, sodass diese Katalysatoren mitgeschädigt bzw. ausgetragen werden. Durch die sich zunehmend reduzierende Menge an Katalysatoren und Kohlenstoff im Bereich der Brennstoffzelle wird diese langfristig in ihrer Lebensdauer beeinträchtigt. Der Vorgang ist auch unter dem Begriff der Kohlenstoffkorrosion bzw. im englischen Sprachraum "carbon corrosion" bekannt.

Um die Kohlenstoffkorrosion einzuschränken und die Lebensdauer der Brennstoffzelle zu verlängern, ist es aus dem Stand der Technik bekannt, Wasserstoff zumindest auf der Anodenseite des Brennstoffzellenstapels beim Abstellen desselben einzuschließen, um so definierte Bedingungen während des Stillstands zu schaffen und eine Sauerstoff-Wasserstoff-Front bzw. Luft-Wasserstoff-Front als Auslöser der Kohlenstoffkorrosion zu vermeiden. In diesem Zusammenhang kann unter anderem auf die DE 10 2007 059 999 A1 hingewiesen werden, welche zu diesem Zweck außerdem Ventileinrichtungen kennt, um den Kathodenbereich abzusperren und somit nachströmende Luft bzw. nachströmenden Sauerstoff und damit ein schnelles Aufbrauchen des Wasserstoffs auf der Anodenseite zu verhindern. Eine Lösung, welche auf die Ventile verzichten kann, ist in der DE 10 2009 036 198 A1 der Anmelderin beschrieben. Auch diese setzt darauf, Wasserstoff nach dem Abstellen des Brennstoffzellensystems im Bereich der Anode zu lassen und somit eine möglichst lange Zeit mit der Wasserstoffatmosphäre bereitzustellen, durch welche die schädlichen Vorgänge vermieden werden. Diese Zeitspanne wird auch als Wasserstoffschutzzeit oder "hydrogen protection time" im englischen Sprachraum bezeichnet.

Zum Verlängern dieser Wasserstoffschutzzeit über die mit nach dem Abstellen in der Brennstoffzelle befindliche Wasserstoffmenge und die damit zu erreichende Zeitspanne hinaus, schlagen verschiedene Schriften vor, Wasserstoff beispielsweise von Zeit zu Zeit oder anhand anderer Kriterien nachzudosieren und so quasi während des gesamten Stillstandes der Brennstoffzelle die Wasserstoffatmosphäre aufrechtzuerhalten und damit die gesamte Stillstandszeit als Wasserstoffschutzzeit zu haben. In diesem Zusammenhang kann rein beispielhaft auf die US 2011/0244348 A1, die US 2011/0143243 A1 sowie die US 2014/0038073 A1 hingewiesen werden. Bei all diesen Schriften ist es so, dass durch die sich quasi ständig wiederholende Nachdosierung von Wasserstoff ein relativ hoher Wasserstoffverbrauch entsteht, da eindiffundierende Luft einen Teil des Wasserstoffs aufbraucht, und da eine absolute Abdichtung gegenüber Wasserstoffleckagen in der Praxis und aufgrund der physikalischen Eigenschaften des Wasserstoffs prinzipbedingt kaum möglich ist. Dies bedeutet, dass in der Praxis bei einem Fahrzeug, welches ein derartiges Brennstoffzellensystem aufweist, und welches sehr lange Stillstandszeiten von beispielsweise mehreren Tagen hat, der Wasserstoffverbrauch so groß werden kann, dass der Tank leer ist, wenn der Nutzer des Fahrzeugs zu dem Fahrzeug zurückkommt. Dies stellt einen gravierenden Nachteil dar und ist in der Praxis höchst unerwünscht.

Ein sogenannter Luft/Luft-Start mit Luft sowohl auf der Anodenseite als auch auf der Kathodenseite ist jedoch nicht nur nachteilig, insbesondere wenn verhindert werden kann, dass die Sauerstoff-Wasserstoff-Front welche zur Kohlenstoffkorrosion führt über die aktive Fläche läuft. Ansonsten führt die beim Luft/Luft-Start auftretende Oxidation nämlich auch dazu, dass absorbierte Verunreinigungen vom Katalysator im Anodenraum oxidiert und damit letztlich abgereinigt werden. Somit ist es durchaus von Vorteil wenn gelegentlich, nicht jedoch immer, ein Luft/Luft-Start stattfindet um insbesondere die CO-Kontaminationen aus dem Betrieb am Katalysator des Anodenraums abzuoxidieren. An solcher Start kann beispielsweise bei einem regelmäßig betriebenen Brennstoffzellensystem, wie dem eines Fahrzeugs, alle ein bis zwei Wochen ein bis zwei Mal von Vorteil sein. In diesem Zusammenhang kann auf die unter anderem auf den Erfinder zurückgehende Veröffentlichung S. Erbach u.a., "Influence of Operating Conditions on Permeation of CO2 through the Membrane in an Automotive PEMFC System", International Journal of Hydrogen Energy (2018) 1-12 hingewiesen werden.

Zum weiteren allgemeinen Stand der Technik ist es aus dem Bereich des Abstellens von Brennstoffzellensystemen ferner bekannt, dass Flüssigkeit in Brennstoffzellensystem kondensiert wird, bevor das Brennstoffzellensystem beispielsweise mit Luft durchgespült wird. Dies hat keinen Bezug zur Kohlenstoffkorrosion sondern dient dazu ein Einfrieren der Brennstoffzelle selbst und relevanter Systemaspekte zu verhindern. Um die Kondensation zu fördern wird nach dem Abstellen des Brennstoffzellensystems dieses dazu beispielweise aktiv gekühlt, wie es in der DE 10 2017 115 703 A1 beschrieben ist.

In dem Dokument DE 10 2018 008 794 A1 ist ein Verfahren zum Abstellen eines Brennstoffzellensystems offenbart. Dabei ist vorgesehen, dass nach einer vorgegebenen Anzahl von Nachdosierungen eine Wasserstoffschutzzeit aktiv abgebrochen wird, indem eine Kathodenraum aktiv mit Luft beaufschlagt wird.

In dem Dokument DE 10 2005 038 927 A1 ist ein Verfahren zum Abschalten eines Brennstoffzellensystems durch Verwendung einer Luftspülung bei niedriger Zellentemperatur offenbart.

In dem Dokument DE 10 2013 210 098 A1 ist ein Brennstoffzellen-System und ein Brennstoffzellen-System-Steuer-/Regelverfahren offenbart.

In dem Dokument DE 10 2011 083 327 A1 ist ein Verfahren zum Abschalten eines Brennstoffzellensystems offenbart. Dabei ist vorgesehen, dass das Brennstoffzellensystem eine Kühlmittelvorrichtung zur Kühlung einer Brennstoffzelle des Brennstoffzellensystems aufweist.

Die Aufgabe der hier vorliegenden Erfindung besteht nun darin, ein verbessertes Verfahren zum Abstellen eines Brennstoffzellensystems mit den Merkmalen im Oberbegriff des Anspruchs 1 anzugeben, welches die im Stand der Technik auftretenden Nachteile minimiert und im tatsächlich auftretenden Betrieb eines Brennstoffzellensystems, insbesondere eines Brennstoffzellensystems in einem Fahrzeug, eine hohe Lebensdauer der Brennstoffzelle gewährleistet.

Erfindungsgemäß wird diese Aufgabe durch ein Verfahren mit den Merkmalen im Anspruch 1 gelöst. Vorteilhafte Ausgestaltungen und Weiterbildungen ergeben sich aus den hiervon abhängigen Unteransprüchen.

Der Erfinder hat erkannt, dass für das Auftreten der Kohlenstoffkorrosion Kohlendioxid abluftseitig des Kathodenraums und abgasseitig des Anodenraums als Maß genutzt werden kann. Mit dieser Erkenntnis hat er eine Strategie entwickelt, um bei einem entsprechend schonenden Umgang mit der Ressource Wasserstoff, und dementsprechend geringen Wasserstoffemissionen an die Umgebung, eine bestmögliche Wasserstoffschutzzeit und letztlich eine optimierte Lebensdauer der Brennstoffzelle zu gewährleisten. Sie sind dabei zu dem erfindungsgemäßen Verfahren gelangt, welches vergleichbar wie die Verfahren im Stand der Technik nach dem Abstellen Wasserstoff im Anodenraum der Brennstoffzelle lässt, und welches zum weiteren Verhindern der Kohlenstoffkorrosion bei weitgehend aufgebrauchtem Wasserstoff in dem Anodenraum ggf. zumindest einmal Wasserstoff in diesen nachdosiert. Erfindungsgemäß ist es bei dem Verfahren nun so, dass nach einer vorgegebenen Anzahl von Nachdosierungen die Wasserstoffschutzzeit aktiv abgebrochen wird, indem der Kathodenraum aktiv mit Luft beaufschlagt wird. Das erfindungsgemäße Verfahren nutzt also die Erkenntnisse aus dem Stand der Technik, um eine Wasserstoffschutzzeit bei Bedarf über einen ersten Zeitraum hinweg aufrechtzuerhalten. So lässt sich beispielsweise über das Belassen von Wasserstoff in dem Anodenraum beim Abstellen der Brennstoffzelle eine Wasserstoffschutzzeit in der Größenordnung von bis zu 10 Stunden erzielen. Erfolgt dann eine Nachdosierung von Wasserstoff, lässt sich die Wasserstoffschutzzeit nochmals um einige Stunden, beispielsweise um ca. 5 bis 7 Stunden verlängern. Die Zeiten hängen dabei jeweils von der Größe und der konstruktiven Ausführung der Brennstoffzelle und des Brennstoffzellensystems ab, da sie von den entsprechenden Volumina und der Anzahl der Schnittstellen und damit der Stellen, an denen gegen den Wasserstoff abgedichtet werden muss, in Verbindung stehen. Die Zahlenwerte sind daher rein beispielhaft und als grobe Richtwerte zur Erläuterung der Idee zu verstehen.

In der Praxis ist es so, dass Brennstoffzellensysteme, insbesondere Brennstoffzellensysteme, welche in Fahrzeugen eingesetzt werden, typischerweise so genutzt werden, dass beispielsweise unter der Woche das Fahrzeug praktisch täglich bewegt wird. Zwischen den einzelnen Nutzungsdauern des Fahrzeugs liegen dabei typischerweise Zeitdauern, welcher kleiner als 15 Stunden sind, welche als zumeist von der Wasserstoffschutzzeit mit einer Nachdosierung vollständig abgedeckt werden können. Beispielsweise, wenn das Fahrzeug während der Arbeit seines Besitzers auf dem Firmenparkplatz steht, auf welchen es morgens bewegt worden ist, und von welchem es abends wieder nach Hause bewegt wird. Häufig ist es dann so, dass das Fahrzeug am Feierabend nochmals genutzt wird. In der Praxis steht das Fahrzeug dann im Maximalfall vom Ende der Arbeit des Benutzers, beispielsweise 16:00 Uhr, bis dieser am nächsten Morgen um 7:00 Uhr wieder zur Arbeit aufbricht. Die Zeitspanne beträgt also in etwa 15 Stunden und lässt sich im Allgemeinen mit einer Nachdosierung von Wasserstoff überbrücken, sodass während des gesamten Stillstands die Wasserstoffschutzzeit vorliegt und die Kohlenstoffkorrosion gänzlich vermieden werden kann. Die Zeit lässt sich beispielsweise durch ein Erfassungssystem über die Nutzungszeiten des Fahrzeugs in Verbindung mit Wochentagen und Uhrzeiten einlernen, sodass aus diesem gelernten Verhalten heraus entschieden werden kann, ob typischerweise eine oder beispielsweise zwei Nachdosierungen erfolgen, um im Normalbetrieb des Fahrzeugs die Wasserstoffschutzzeit durchgehend aufrechtzuerhalten.

Wie eingangs erwähnt kann es nun sinnvoll sein von Zeit zu Zeit einen Luft/Luft-Start vorzunehmen, sodass in diesem Fall auch auf die Nachdosierung von Wasserstoff ganz verzichtet werden kann. Dies kann beispielsweise über einen Zähler realisiert werden, welcher die Anzahl an Starts innerhalb der Wasserstoffschutzzeit entsprechend zählt und ab einer bestimmten vorgegebenen Größe die Anzahl der Nachdosierungen auf null reduziert, um beispielsweise alle ein bis zwei Wochen einen Luft/Luft-Start zu erreichen. Ist nun ein bewusster Luft/Luft-Start geplant oder steht das Fahrzeug länger als üblich, wird die Wasserstoffschutzzeit aktiv abgebrochen. Beispielsweise wenn das Fahrzeug länger als 18 oder 20 Stunden steht und mit einer oder zwei Nachdosierungen die übliche Standzeit des Fahrzeugs komplett unter Wasserstoffatmosphäre realisiert worden ist. Das längere Stehen des Fahrzeugs deutet dann darauf hin, dass beispielsweise Wochenende ist und das Fahrzeug nicht genutzt wird, dass der Nutzer des Fahrzeugs Urlaub hat, das Fahrzeug deshalb nicht benötigt oder dgl. Zu diesem Zeitpunkt kann dann beispielsweise zeitgesteuert oder in Abhängigkeit von Parametern des Brennstoffzellensystems, welche das Ende der Wasserstoffschutzzeit beispielsweise der ersten Nachdosierung andeuten, die Wasserstoffschutzzeit aktiv abgebrochen werden. Dabei wird vor dem aktiven Abbrechen der Wasserstoffschutzzeit das Brennstoffzellensystem abgekühlt. Dies ist insbesondere dann sinnvoll wenn die Zeitspanne bis zum sich ergebenden oder aktiv gewollten Luft/Luft-Start nicht allzu lang war. Das Brennstoffzellensystem selbst, welches auf einer relativ hohen Betriebstemperatur von beispielsweise 70-90°C arbeitet kühlt entsprechend langsam ab, insbesondere wenn die Wasserstoffatmosphäre im Inneren aufrechterhalten werden soll und deshalb Konvektionsvorgänge weitgehend unterbunden werden. Nun hat sich dem Erfinder aber gezeigt, dass das Maß der Kohlenstoffkorrosion mit der Temperatur der Brennstoffzelle korreliert. Je höher die Temperatur desto höher ist der Peak an gemessenem CO₂ beim Luft/Luft-Start der Brennstoffzelle. Durch die aktive Kühlung kann erreicht werden, dass die Temperatur des Brennstoffzellensystems so niedrig wie möglich ist, wenn der Luftcrossover einsetzt. Dies führt zu einer weiteren Verbesserung der Lebensdauer der Brennstoffzelle.

Ein solches aktives Abbrechen der Wasserstoffschutzzeit, insbesondere bei einer Systemtemperatur von 20°C oder weniger, durchbricht die im Normalfall auftretenden schädlichen Prozesse dadurch, dass eine aktive Luftversorgung des Kathodenraums erfolgt. Die Wasserstoffschutzzeit wird also bewusst beendet, und zwar durch die aktive Zufuhr von Sauerstoff innerhalb einer relativ kurzen Zeitspanne, in welcher der Sauerstoffgehalt ansteigt. Die Untersuchungen und Messwerte der Erfinder in der Praxis haben nämlich gezeigt, dass die Verfahren gemäß dem Stand der Technik ohne Nachdosierung von Wasserstoff oder auch mit einer oder mehreren Nachdosierung von Wasserstoff, die irgendwann abgebrochen werden, immer zu einer in etwa vergleichbaren Kohlenstoffkorrosion geführt haben. An den für die Untersuchungen herangezogenen Brennstoffzellenstapeln erreichte das Maximum der CO₂-Bildung dabei jeweils einen Wert von ca. 4.000 bis 4.500 ppm, was selbstverständlich von der Baugröße und der Konstruktion des Brennstoffzellenstapels abhängt. Mit dem erfindungsgemäßen Verfahren, welches nach der wenigstens einen ersten Nachdosierung die Wasserstoffschutzzeit aktiv abbricht, konnten die Erfinder einen sehr schnellen Wechsel der Gase erreichen, sodass die Kohlenstoffkorrosion deutlich reduziert werden konnte. Beim selben Brennstoffzellenstapel, bei dem beim selbstständigen Auslaufen der Wasserstoffschutzzeit Kohlendioxidwerte in der Größenordnung von 4.000 bis 4.500 ppm gemessen wurden, konnten bei einem aktiven Abbruch der Wasserstoffschutzzeit und einem Brennstoffzellensystem, welches nach einer aktiven Abkühlung eine Systemtemperatur von weniger als ca. 20°C aufwies, Kohlenstoffdioxidwerte von 900 bis 1.200 ppm gemessen werden. Die aufgetretene Kohlenstoffkorrosion lässt sich durch das aktive Abbrechen des Wasserstoffschutzzustandes gegenüber dessen passivem Auslaufen also um in etwa den Faktor 4 absenken.

Das erfindungsgemäße Verfahren erlaubt es in der Praxis beispielsweise, durch eine geringe Anzahl von ein oder zwei Nachdosierungen bei wirtschaftlichem Umgang mit der Ressource Wasserstoff in vielen Phasen die Wasserstoffschutzzeit über die gesamte Stillstandsphase des Brennstoffzellensystems, welches insbesondere in einem Fahrzeug eingesetzt werden soll, aufrechtzuerhalten. Kommt es zu längeren Stillstandszeiten, beispielsweise an Wochenenden, in Ferien oder dgl., wird ohne oder nach einer vorgegebenen Anzahl von Nachdosierungen, der Wasserstoffschutzzustand im aktiv abgekühlten Brennstoffzellensystem abgebrochen und der Kathodenraum mit Luft beaufschlagt. Hierdurch wird eine gewisse Kohlenstoffkorrosion akzeptiert. Die Untersuchungen haben jedoch gezeigt, dass die Kohlenstoffkorrosion beim aktiven Abbruch der Wasserstoffschutzzeit und zuvor aktiv abgekühlten Brennstoffzellensystem sehr viel weniger Kohlenstoff korrodiert als beim passiven Auslaufen der Wasserstoffschutzzeit, sodass insgesamt immer noch ein deutlicher Vorteil hinsichtlich der Lebensdauer, insbesondere proportional zum Unterschied in der entstehenden Menge an Kohlendioxid, zu erreichen ist.

Beim Einsatz des Brennstoffzellensystems in einem Fahrzeug erfolgt die aktive Abkühlung gemäß des erfindungsgemäßen Verfahrens nach dem Abstellen des Fahrzeugs. Das Fahrzeug kann dann bis zum Abstellen in vollem Umfang genutzt werden, während die aktive Abkühlung erst nach dem Abstellen des Fahrzeugs stattfindet, um damit die später erfolgende oder ggf. erfolgende aktive Belüftung zum Abbruch der Wasserstoffschutzzeit entsprechend vorzubereiten.

Dabei erfolgt vor dem Beaufschlagen des Kathodenraums mit Luft die aktive Abkühlung so lange, bis entweder ein vorgegebener Temperaturgrenzwert unterschritten und/oder eine vorgegebene Zeitspanne abgelaufen ist. Ein solcher Temperaturwert kann beispielsweise in der Größenordnung von 20°C wie oben bereits angedeutet, vorgegeben werden. Lässt die Umgebungstemperatur eine dermaßen starke Abkühlung nicht zu, weil beispielsweise 30° oder 35° C in der Umgebung herrschen, dann kann nach einer vorgegebenen Zeitspanne und der damit erreichbaren niedrigsten möglichen Temperatur in Abhängigkeit der Umgebungstemperatur die aktive Abkühlung ebenfalls abgebrochen werden. In diesem Fall muss eine etwas höhere Kohlenstoffkorrosion in Kauf genommen werden, dies ist aber aufgrund der Umgebungstemperatur nicht ohne Weiteres zu vermeiden.

Gemäß einer weiteren vorteilhaften Ausgestaltung der Idee kann es ferner vorgesehen sein, dass der vorgegebene Temperaturgrenzwert und/oder die Zeitspanne in Abhängigkeit mit der Umgebungstemperatur oder auch einer zu erwartenden Umgebungstemperatur zum Zeitpunkt der aktiven Belüftung vorgegeben wird. Ist absehbar, dass die Umgebungstemperatur sinkt, beispielsweise weil es bereits Abend ist und die aktive Belüftung voraussichtlich erst in der Nacht erfolgen wird, oder weil entsprechende meteorologische Vorhersagen eine absinkende Temperatur nahe legen, kann dies beim vorgegebenen Temperaturgrenzwert oder der Zeitspanne entsprechend berücksichtigt werden.

Eine weitere sehr günstige Ausgestaltung sieht es ferner vor, dass bei einer Verwendung des Brennstoffzellensystems zusammen mit einem elektrischen Energiespeicher in einem Fahrzeug die aktive Abkühlung des erfindungsgemäßen Verfahrens bereits vor dem Abstellen des Fahrzeugs erfolgt, wenn dieses sich zu einem Zielort nähert. Das Fahrzeug wird dann während des Abkühlens des Brennstoffzellensystems mit der zum Antrieb und dergleichen notwendigen Leistung aus dem elektrischen Energiespeicher versorgt. Das Brennstoffzellensystem in dem Fahrzeug kann so unter Zuhilfenahme des ohnehin vorhandenen Fahrtwindes sehr energieeffizient abgekühlt werden.

Eine sehr vorteilhafte Weiterbildung dieser Variante des erfindungsgemäßen Verfahrens sieht es dabei vor, dass eine Annäherung an einen Zielort über einen Navigationssystem erkannt wird, wobei programmierte oder erlernte Zielorte Verwendung finden. Im letzten Fahrabschnitt, bevor dieser Zielort erreicht wird, insbesondere eine vorgegebene Zeitspanne vor der zu erwartenden Ankunft kann dann die Brennstoffzelle, welche dann aktiv keine Leistung mehr liefert, aktiv abgekühlt werden. Die Fahrt erfolgt mit Leistung aus dem elektrischen Energiespeicher.

Eine außerordentlich günstige Weiterbildung dieser Idee sieht es dabei ferner vor, dass die aktive Abkühlung im letzten Abschnitt der Fahrt vor dem Zielort geplant wird, während in einem davorliegenden vorletzten Abschnitt der Fahrt, also bevor die aktive Kühlung erfolgt, der elektrische Energiespeicher durch die Brennstoffzelle geladen wird. Ist bekannt, dass zur aktiven Abkühlung der Brennstoffzelle beispielsweise 15-20 Minuten notwendig sind, dann kann beispielsweise in einer Zeitspanne von ca. 45 Minuten vor der Ankunft am Zielort das aktive Laden des elektrischen Energiespeichers auf seinen höchsten Ladezustand starten, sodass dieser dann ca. 15-20 Minuten bevor der Zielort erreicht wird vollständig geladen ist. Jetzt steht die maximale Energie in dem elektrischen Energiespeicher zur Verfügung und das Brennstoffzellensystem beziehungsweise die Brennstoffzelle können deaktiviert und aktiv gekühlt werden. Beim Erreichen des Zielorts liegt so bereits eine entsprechende niedrige Temperatur der Brennstoffzelle vor, um im Falle, dass die Wasserstoffschutzzeit aktiv abgebrochen werden muss, eine möglichst geringen Kohlenstoffkorrosion zu erreichen.

Eine außerordentlich günstige Ausgestaltung des erfindungsgemäßen Verfahrens sieht es nun vor, dass die Anzahl der Nachdosierungen wie oben bereits erwähnt, in Abhängigkeit eines Zählers, welcher die Anzahl an Starts ohne aktive Belüftung des Kathodenraums zählt, vorgegeben wird. Dieser ermöglicht es durch die Vorgabe der Zählgröße zumindest von Zeit zu Zeit einen Luft/Luft-Start zu erzwingen, um den Katalysator des Anodenraums in der oben beschriebenen Art und Weise zu reinigen. Wird aufgrund anderer Bedingungen wie beispielsweise einer entsprechend langen Stillstandszeit oder dergleichen ein Luft/Luft-Start durchgeführt, wird der Zähler zurückgesetzt, sodass keine unnötigen Luft/Luft-Starts durchgeführt werden müssen, was sich bei einer entsprechend großen Anzahl ihres Auftretens wieder nachteilig auf die Lebensdauer der Brennstoffzelle auswirken würde.

Alternativ oder ergänzend hierzu kann es gemäß einer sehr vorteilhaften Weiterbildung der Idee auch vorgesehen sein, dass die Anzahl der Nachdosierungen in Abhängigkeit der Umgebungstemperatur oder anhand des zu erwartenden Umgebungstemperaturverlaufs vorgegeben wird. Liegt die Umgebungstemperatur aktuell sehr hoch, und ist eine aktive Abkühlung beispielsweise unter einen Schwellenwert von 20°C kaum möglich, kann über eine Nachdosierung oder eine weitere Nachdosierung die Wasserstoffschutzzeit entsprechend verlängert werden. Diese ist insbesondere dann sinnvoll, wenn ein zu erwartender Temperaturverlauf, welcher beispielsweise aus der Uhrzeit aus erlernten Temperaturgegebenheiten, oder auch aus einer meteorologischen Vorhersage abgeleitet werden kann, eine verbesserte Abkühlung zu einem späteren Zeitpunkt ermöglicht. Ist es z.B. Abend, dann kann bis in die Nacht abgewartet werden, bevor die Brennstoffzelle aktiv gekühlt und die Wasserstoffschutzzeit aktiv abgebrochen wird. In diesem Fall ist nämlich eine geringere Umgebungstemperatur und damit die Möglichkeit einer stärkeren Abkühlung der Brennstoffzelle durch die aktive Kühlung zu erwarten. Auch bei einem aufgrund einer meteorologischen Vorhersage erkennbaren Temperaturverlauf hin zu niedrigeren Umgebungstemperaturen kann gegebenenfalls eine weitere Nachdosierung sinnvoll sein, um einen solchen Effekt zu erreichen.

Als weitere ergänzende oder alternative Möglichkeit die Anzahl der Nachdosierungen beispielsweise in der Größenordnung zwischen null und drei Nachdosierungen entsprechend zu bestimmen kann auch die zu erwartende Stillstandszeit in Abhängigkeit des Zielortes, der Uhrzeit, des Datums und/oder eines Kalendereintrags sein. Wie Eingangs bereits erwähnt, ist es so, dass beispielsweise am Wochenende typischerweise längere Stillstandszeiten auftreten. Wird das Fahrzeug also beispielsweise zu Hause am Wochenende abgestellt, kann die Anzahl der Nachdosierungen entsprechend reduziert werden, insbesondere wenn der Zähler gleichzeitig bereits relativ hoch ist, um so einen ohnehin gewünschten oder zumindest in Kürze notwendigen Luft/Luft-Start zu erreichen. Neben der Uhrzeit und dem Datum können dabei auch Kalendereinträge mitberücksichtigt werden. Das Fahrzeug beispielsweise am Flughafen abgestellt und im Kalender ist eine Geschäftsreise oder Urlaub vermerkt, kann ebenfalls von einer längeren Stillstandszeit ausgegangen werden, sodass auf den Verbrauch von Wasserstoff durch eine Nachdosierung direkt verzichtet und nach erfolgter Abkühlung die Wasserstoffschutzzeit relativ schnell aktiv beendet wird.

Weitere vorteilhafte Ausgestaltungen und Weiterbildungen des Verfahrens ergeben sich auch aus dem Ausführungsbeispiel, welches nachfolgend anhand der Figuren näher erläutert wird.

Dabei zeigen:
- Fig. 1: ein Diagramm der Konzentrationen über der Zeit bei einem ersten Verfahren gemäß dem Stand der Technik;
- Fig. 2: ein Diagramm der Konzentrationen über der Zeit bei einem zweiten Verfahren gemäß dem Stand der Technik;
- Fig. 3: ein beispielhaftes Brennstoffzellensystem, welches zur Durchführung des erfindungsgemäßen Verfahrens geeignet ist; und
- Fig. 4: ein Diagramm der Konzentrationen über der Zeit bei einem Verfahren gemäß der Erfindung;
- Fig. 5: ein Diagramm von gemessenen Kohlenstoffdioxid-Peak-Werten über der Temperatur; und
- Fig. 6: ein Ablaufdiagramm einer möglichen Ausführung des erfindungsgemäßen Verfahrens.

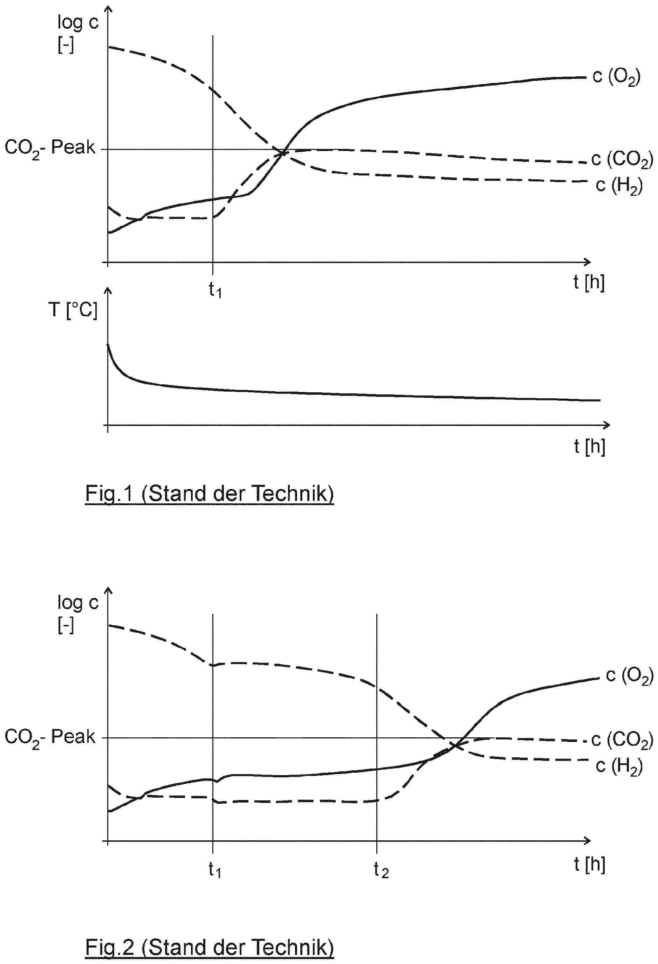

Die Figuren 1 und 2 zeigen die Verfahren gemäß dem Stand der Technik. In Fig. 1 ist ein Diagramm verschiedener Konzentrationen c dargestellt, welche auf der y-Achse logarithmisch aufgetragen sind, und zwar über der Zeit t in Stunden auf der x-Achse. Die durchgezogene Linie c(O₂) steht dabei für die Sauerstoffkonzentration in der Brennstoffzelle, die strichpunktierte Linie c(H₂) für die Wasserstoffkonzentration. Um die Kathodenkorrosion zu erfassen, ist außerdem mit der gestrichelten Linie 3 die Konzentration c(CO₂) mit dargestellt. Das Verfahren in der Darstellung der Fig. 1 entspricht dabei im Wesentlichen dem im eingangs genannten Stand der Technik beschriebenen Verfahren, bei welchem der Wasserstoff lediglich im Anodenraum eingeschlossen wird, und zuerst einmal keine Nachdosierung an Wasserstoff erfolgt. Über dieses Verfahren ist eine Wasserstoffschutzzeit bis zum Zeitpunkt t₁ zu erzielen, welche in der Größenordnung von beispielsweise ca. 10 Stunden liegt. Danach steigt die Konzentration an Kohlendioxid entsprechend an, was ein Anzeichen für eine vermehrte Kohlenstoffkorrosion ist. Der Maximalwert CO₂-Peak liegt dabei bei ca. 4.200 ppm in dem hier dargestellten Diagramm. Während der Wasserstoffschutzzeit bis zum Zeitpunkt t₁ kann die Brennstoffzelle abkühlen. Das Abkühlverhalten ist in der Darstellung der Figur 1 unten durch die aufgetragene Temperatur T über derselben Zeitachse t dargestellt. Die Temperatur kann dabei beispielsweise die Eintrittstemperatur in den Anodenraum sein.

Die Unterschiede sind minimal, dass quantitative Verhalten aller im Brennstoffzellensystem beziehungsweise der Brennstoffzelle gemessenen Temperaturverlauf im Wesentlichen gleich. Die Abkühlung erfolgt erst relativ schnell, und dann danach sehr langsam. Das System wird also, beispielsweise wenn es sich in einer Garage geparkten Fahrzeug befindet über einen sehr langen Zeitraum auf einer Temperatur von beispielsweise 30-35°C verharren.

Während der Wasserstoffschutzzeit werden Luft-Wasserstoff-Fronten durch den Überdruck von Wasserstoff in der Anode verhindert und Wasserstoff kann zur Kathode diffundieren. Als positiver Nebeneffekt zeigt sich, dass der Wasserstoff im Kathodenraum während des Betriebs entstandenes Platinoxid reduzieren und somit Katalysatorfläche im Kathodenraum wieder freigeben kann. Ist der Wasserstoff weitgehend aufgebraucht, endet die Wasserstoffschutzzeit zum Zeitpunkt t₁, da der Wasserstoff beispielsweise durch Undichtheiten entwichen ist oder mit Sauerstoff zu Wasser reagiert hat. In dieser Phase kommt es nun zu einem passiven Übergang von der Wasserstoffschutzzeit in die danach liegende Zeit, bei welcher sich in der Fläche entlang der Elektrolyt-Membranen inplane-Ströme ausbilden und langsam über die Standzeit hinweg den Kohlenstoffträger des Platinkatalysators korrodieren und somit die Lebensdauer der Brennstoffzelle nachteilig beeinflussen. In dieser Phase wird eine maximale Kohlendioxidkonzentration als Maß für die aufgetretene Kohlenstoffkorrosion von ca. 4.200 ppm erfasst.

Dennoch gibt es auch in dieser Phase positive Nebeneffekte. Sauerstoff, welcher in den Anodenraum gelangt, bewirkt dort nicht nur Korrosion, sondern er kann zuweilen auch absorbierte Verunreinigungen oxidieren und damit die Oberfläche des Katalysators im Anodenraum wieder freigeben.

In der Darstellung der Fig. 2, welche ebenfalls ein Verfahren nach dem Stand der Technik zeigt, und welche dieselbe Einteilung der Achsen nutzt, zeigt das Verfahren, bei welchem zum Zeitpunkt t₁ eine Nachdosierung von Wasserstoff erfolgt. Die Wasserstoffschutzzeit wird so bis zum Zeitpunkt t₂ ausgedehnt. Zwischen den Zeiten t₁ und t₂ kann die Brennstoffzelle weiter auskühlen und ist durch den nachdosierten Wasserstoff auch weiterhin vor den korrosiven Potenzialen, insbesondere bei erhöhten Temperaturen der Brennstoffzelle, geschützt. Luft-Wasserstoff-Fronten werden auch hier durch den Überdruck von Wasserstoff weiter verhindert, sodass insgesamt Standzeiten bis zum Zeitpunkt t₂ in der Größenordnung von 10 bis 20 Stunden, beispielsweise ca. 14 bis 16 Stunden, möglich sind, bevor die Bildung des hier auch wieder gestrichelt dargestellten Kohlendioxids auf die zunehmende Kohlenstoffkorrosion schließen lässt. Solange der Wiederstart der Brennstoffzelle innerhalb der Zeitspanne bis zum Zeitpunkt t₂ erfolgt, ist dieses Verfahren gut geeignet, um durch den Wiederstart innerhalb der Wasserstoffschutzzeit einen für die Lebensdauer der Brennstoffzelle schonenden Start zu bewerkstelligen. Falls nicht, kommt es ab dem Zeitpunkt t₂ vergleichbar wie im Diagramm der Fig. 1 ab dem Zeitpunkt t₁ zu einem passiven Ende der Wasserstoffschutzzeit und damit zu der gefürchteten Kohlenstoffkorrosion, welche auch hier wieder durch einen CO₂-Peak in der Größenordnung von ca. 4.200 ppm zu messen ist, wobei dieser Wert ein Maß für die aufgetretene Kohlenstoffkorrosion darstellt.

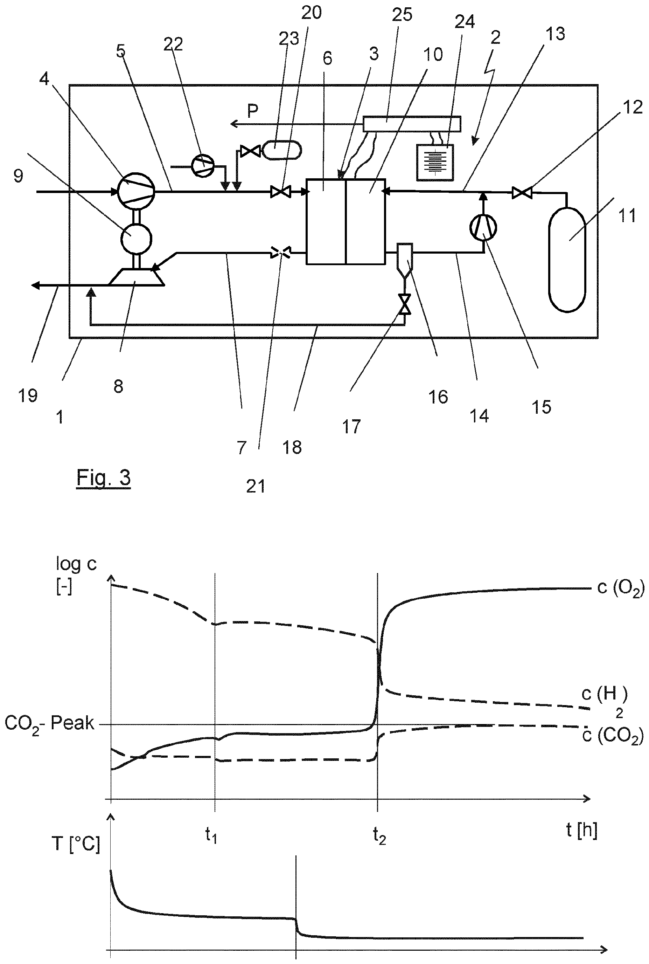

In der Darstellung der Fig. 3 ist ein schematisch angedeutetes Fahrzeug 1 gezeigt, welches seine elektrische Antriebsenergie über ein ebenfalls schematisch dargestelltes Brennstoffzellensystem 2 erhalten soll. Den Kern des Brennstoffzellensystems 2 bildet dabei eine Brennstoffzelle 3, welche als Stapel von Einzelzellen in PEM-Technologie, als sogenannter Brennstoffzellenstack aufgebaut ist. Jede der Einzelzellen umfasst dabei einen Kathodenraum 6 und einen Anodenraum 10, welche über entsprechende Strömungsfelder und Gasverteiler sowie eine Elektrolytmembran voneinander getrennt ausgebildet sind. Dem Kathodenraum 6 wird Luft als Sauerstofflieferant über eine Luftfördereinrichtung 4 und eine Zuluftleitung 5 zugeführt. Nicht verbrauchte Abluft gelangt im regulären Betrieb über eine Abluftleitung 7 und eine Abluftturbine 8 in die Umgebung. In der Abluftturbine 8 wird ein Teil der Druck- und Wärmeenergie in der Abluft zurückgewonnen. Die Abluftturbine 8 steht in Wirkverbindung mit der Luftfördereinrichtung 4, um diese unterstützend anzutreiben. Eine elektrische Maschine 9, welche ebenfalls mit der Abluftturbine 8 und der Luftfördereinrichtung 4 in Wirkverbindung steht, kann nun einerseits zum Antreiben der Luftfördereinrichtung 4 genutzt werden, insbesondere zur Lieferung der unterstützenden Antriebsleistung, wenn die Abluftturbine 8 keine ausreichende Leistung liefert, was der reguläre Betriebsfall sein wird. Bei einem Leistungsüberschuss an der Abluftturbine 8 kann die elektrische Maschine 9 auch generatorisch betrieben werden.

Dem Anodenraum 10 wird Wasserstoff zugeführt, welcher in dem hier dargestellten Ausführungsbeispiel aus einem mit 11 bezeichneten Druckgasspeicher über ein Druckregel- und Dosierventil 12 und eine Wasserstoffzuleitung 13 zu dem Anodenraum 10 strömt. Nicht verbrauchter Wasserstoff gelangt über eine Rezirkulationsleitung 14 und eine Rezirkulationsfördereinrichtung 15, welche hier beispielhaft als Gebläse ausgebildet ist, zurück in die Wasserstoffzuleitung 13 und wird vermischt mit frischem Wasserstoff dem Anodenraum 10 erneut zugeführt. Dieser Aufbau ist soweit aus dem Stand der Technik bekannt und wird als Anodenkreislauf bezeichnet. Die Rezirkulationsfördereinrichtung 15 kann alternativ zu dem hier dargestellten Gebläse auch als Gasstrahlpumpe oder als Kombination aus einem Gebläse und einer Gasstrahlpumpe ausgebildet sein.

Mit der Zeit sammelt sich in dem Anodenkreislauf Wasser und inertes Gas. Das Wasser wird über einen Wasserabscheider 16 abgeschieden. Über eine Ventileinrichtung 17 kann das Wasser und inertes Gas, welches sich in dem Anodenkreislauf angesammelt hat, über eine Ablassleitung 18, beispielsweise von Zeit zu Zeit oder in Abhängigkeit der Wasserstoffkonzentration in dem Anodenkreislauf, abgelassen werden. Das mit dem Wasser beladene Abgas gelangt dabei nach der Abluftturbine 8 in den dortigen Teil der Abluftleitung 19. Dieser Aufbau ist soweit aus dem Stand der Technik bekannt, auch hinsichtlich seiner Funktionalität. Er wird in der Praxis weitere Komponenten, wie beispielsweise einen Ladeluftkühler, einen Befeuchter oder dgl. umfassen. Diese sind zum Verständnis der hier vorliegenden Erfindung von untergeordneter Bedeutung und daher nicht dargestellt. Gleichwohl können sie entsprechend vorhanden sein, wie es dem Fachmann für Brennstoffzellensysteme geläufig ist.

In der Zuluftleitung 5 ist ebenso wie optional in der Abluftleitung 7 eine Ventileinrichtung 20, 21 angeordnet. Über diese kann der Kathodenraum 6 bei Bedarf von einer Durchströmung mit Luft abgeriegelt werden, insbesondere im Stillstand des Brennstoffzellensystems 2. Vorzugsweise ist nur die Ventileinrichtung 20 in der Zuluftleitung 5 vorhanden, da diese weniger kritisch hinsichtlich des Einfrierens ist.

In der Darstellung der Figur 3 ist in dem Fahrzeug 1 ferner ein elektrischer Energiespeicher 24 angedeutet, beispielsweise eine Batterie. Dieser steht ebenso wie die Brennstoffzelle 3 elektrisch mit einer Leistungselektronik 25 in Verbindung, welche die benötigte elektrische Leistung P an das Fahrzeug 1 liefert, um das Fahrzeug 1 anzutreiben und den Energiebedarf von Nebenverbrauchern zu decken.

In der Darstellung der Fig. 4 ist nun der Ablauf des erfindungsgemäßen Verfahrens wiederum in einem Diagramm mit logarithmisch aufgetragenen Konzentrationen über der in Stunden aufgetragenen Zeit t und dem darunter dargestellten Temperaturverlauf T über die Zeit t zu erkennen. Die Abschnitte bis zum Zeitpunkt t₁ entsprechen dabei denen der Fig. 1, der Abschnitt bis zum Zeitpunkt t₂ dem der Fig. 2 und somit dem Stand der Technik. Zum Zeitpunkt t₂ startet nun ein besonderes Verfahren. Anstelle einer weiteren Nachdosierung von Wasserstoff, welche hier ein- oder zweimalig auch noch denkbar wäre, kommt es zu einem aktiven Abbrechen der Wasserstoffschutzzeit. Hierfür wird der Kathodenraum 6, welcher bisher über die Ventileinrichtung 20, oder wenn vorhanden, über die Ventileinrichtung 20 und 21 abgesperrt war, aktiv belüftet. Die Ventileinrichtung 20 und 21 wird hierfür geöffnet. Die Luftfördereinrichtung 4 kann prinzipiell betrieben werden, um den Kathodenraum 6 entsprechend zu belüften und mit Sauerstoff zu versorgen, um die Wasserstoffschutzzeit aktiv abzubrechen. Um auf den Betrieb der relativ aufwendigen, beispielsweise als Strömungsverdichter ausgebildeten Luftfördereinrichtung 4 verzichten zu können, kann alternativ optional ein Gebläse 22 und/oder ein Druckluftspeicher 23 vorhanden sein. Auch diese eignen sich, um den Kathodenraum 6 zum Zeitpunkt t₂ zu belüften und somit die Wasserstoffschutzzeit aktiv abzubrechen.

Vor dem aktiven Abbrechen der Wasserstoffschutzzeit wird das Brennstoffzellensystem 2 beziehungsweise die Brennstoffzelle 3 dabei aktiv gekühlt. Dies ist aus dem Temperaturverlauf in Figur 4 unten zu erkennen zum Zeitpunkt t_{1'} erfolgt eine aktive Abkühlung beispielsweise von einem Temperaturniveau in der Größenordnung von 35°C auf ein Temperaturniveau unter 20°C. Die aktive Abkühlung zumindest der Brennstoffzelle 3 des Brennstoffzellensystems 2 erfolgt also vor dem Abbruch der Wasserstoffschutzzeit. Sie kann auch sehr viel früher erfolgen, beispielsweise direkt nach dem Abstellen oder auch schon vor dem Abstellen des Fahrzeugs 1. Dafür kann das Fahrzeug 1 mit Energie aus der Batterie beziehungsweise dem elektrischen Energiespeicher 24 betrieben werden, während die dann inaktive Brennstoffzelle 3 abgekühlt wird. Um dies vorzubereiten und einen ausreichenden Energieinhalt des elektrischen Energiespeichers 24 zu gewährleisten kann beispielsweise in Abhängigkeit eines programmierten oder erlernten Zieles und der aktuellen Position des Fahrzeugs 1, welche über GPS beispielsweise in einem Navigationssystem festgestellt werden kann, ein Vollladen des elektrischen Energiespeichers 24 erfolgen, um dann ausreichend Energie zur Versorgung des Fahrzeugs 1 mit Leistung P und zur aktiven Abkühlung der Brennstoffzelle 3 zur Verfügung zu haben.

Wie im Diagramm der Fig. 4 zu erkennen ist, bewirkt dieses aktive Abbrechen einen deutlichen Anstieg der Sauerstoffkonzentration gemäß der durchgezogenen Linie bei gleichzeitigem Abfall der Wasserstoffkonzentration gemäß der strichpunktierten Linie. Auch hier kommt es unvermeidbar zu einer Kohlenstoffkorrosion, wie es durch die Konzentration des Kohlendioxids mit der gestrichelten Linie angedeutet ist. Es ist nun jedoch erkennbar, wobei es durch die logarithmische Skalierung der y-Achse deutlich weniger stark zu erkennen ist, als es bei einer linearen Darstellung wäre, dass die maximale Menge an Kohlendioxid, also der CO₂-Peak, deutlich geringer ist als bei den in Figuren 1 und 2 gezeigten Verfahren gemäß dem Stand der Technik. Dies wäre auch ohne aktive Kühlung der Brennstoffzelle 3 bereits der Fall, wie es aus der nichtvorveröffentlichten deutschen Patentanmeldung 10 2018 008794.9 bekannt ist.

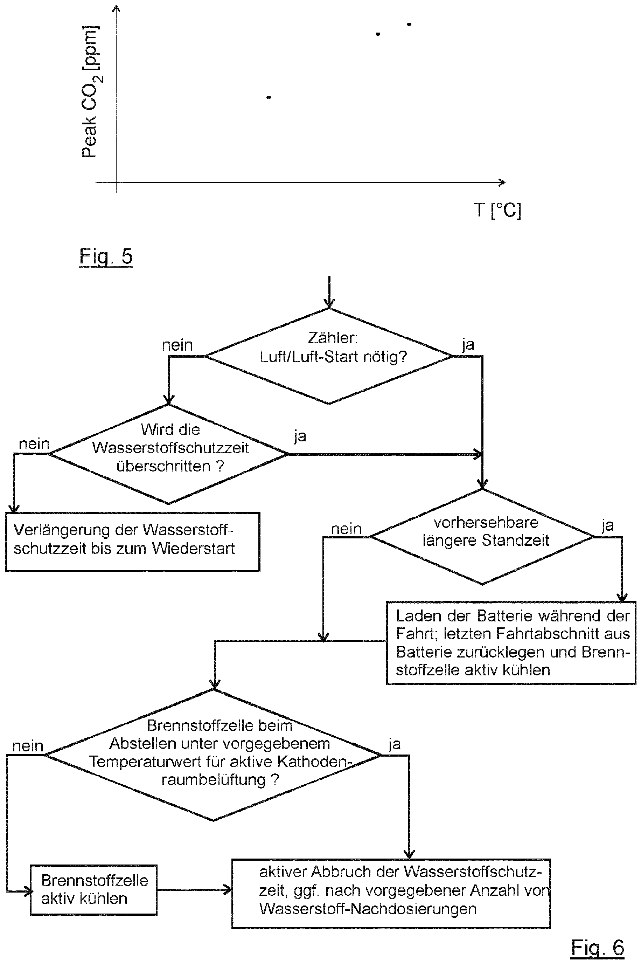

Durch die aktive Kühlung der Brennstoffzelle 3 lässt sich dieser CO₂-Peak noch weiter reduzieren. Der gemessene CO_{2 -}Peak hängt nämlich von der Temperatur der Brennstoffzelle 3 ab. Das in Figur 5 gezeigte Diagramm zeigt beispielhaft drei Messwerte des CO₂-Peaks am Beispiel eines Verfahrens gemäß der Figur 1 bei unterschiedlichen Temperaturen von beispielsweise 20°C , 35°C und 40°C. Der CO₂-Peak reduziert sich dabei von den oben angesprochenen Werten in der Größenordnung von 4200ppm bei 40°C auf ca. 4000ppm bei 35°C und letztlich auf weniger als 3000ppm bei 20°C. Kombiniert an also nun das aktive Abbrechen der Wasserstoffschutzzeit mit einem zuvor erfolgenden Abkühlung der Brennstoffzelle 3, , dann führt dies zu einer weiteren signifikanten Absenkung des CO₂₋Peak beim aktiven Abbrechen der Wasserstoffschutzzeit.

Beim gleichen Brennstoffzellenstapel, welcher auch den Versuchswerten der Figuren 1 und 2 zugrunde liegt, gemessen, war der CO₂-Peak hier ohne aktive Kühlung bei ca. 1.100 ppm und mit einer aktiven Kühlung bei nur ca. 800 bis 900 ppm, also in der Größenordnung von weniger als einem Viertel des CO₂-Peaks bei den Verfahren gemäß dem Stand der Technik. Durch das aktive Beenden der Wasserstoffschutzzeit lässt sich also die Kohlenstoffkorrosion signifikant verringern.

Dazu wird zum Zeitpunkt t₂ aktiv ein Gasaustausch in dem Kathodenraum 6 vorgenommen, indem diese beispielsweise über ein kleines aus der Starterbatterie betreibbares Gebläse 22 entsprechend belüftet wird. Dieser Gasaustausch führt dann auch im Anodenraum 10 durch Permeation zu einer Veränderung, wodurch Sauerstoff-Wasserstoff-Fronten, die sich langsam ausbilden, vermieden werden. Durch das Vermeiden der sich langsam ausbildenden Sauerstoff-Wasserstoff-Fronten bzw. Luft-Wasserstoff-Fronten lässt sich die hohe Kohlenstoffkorrosion aus dem passiven Abbruch der Wasserstoffschutzzeit also deutlich verringern, was einen entscheidenden Vorteil darstellt, insbesondere wenn, wie eingangs erwähnt, das aktive Abbrechen nicht in jeder Stillstandszeit des Brennstoffzellensystems 2 bzw. des Fahrzeugs 1 erfolgt, sondern nur dann, wenn der Wiederstart nicht innerhalb der mit wenigen Nachdosierungen bereitstellbaren Wasserstoffschutzzeit erfolgt war.

Wie bereits erwähnt kann jedoch von Zeit zu Zeit ein Luft/Luft-Start, insbesondere wenn er ohne eine kritische sich langsam ausbildende Sauerstoff-Wasserstoff-Front erfolgen kann, von Vorteil sein um Verschmutzungen wie beispielsweise angelagertes Kohlenstoffmonoxid vom Katalysator des Anodenraums 10 zu entfernen. Aus diesem Grund kann ein Zähler eingesetzt werden, über welchen die Anzahl der Starts ohne aktive Belüftung des Kathodenraums 6, also ohne aktiv abgebrochene Wasserstoffschutzzeit erfasst wird. Nach einer vorgegebenen Anzahl kann dann die Nachdosierung unterbunden oder ihre Anzahl reduziert werden, um einen in diesem Fall gewollten Luft/Luft-Start zu erreichen. Außerdem wird dabei die Temperatur entsprechend berücksichtigt, sodass der Luft/Luft-Start, egal ob er gewollt ist oder sich aufgrund eines Abbruchs der Wasserstoffschutzzeit nach (mehrfacher) Nachdosierung ergibt, möglichst bei geringer Temperatur und zuvor abgekühlten Brennstoffzellensystem 2 erfolgen kann.

Eine Möglichkeit für das Verfahren entsprechend umzusetzen ergibt sich daher aus dem in Figur 6 gezeigten Ablaufdiagramm. Ist ein solcher Zähler vorhanden wird anhand der Zählgröße ermittelt ob ein Luft/Luft-Start nötig ist oder nicht. Ist er dies nicht wird geprüft ob aller Voraussicht nach die Wasserstoffschutzzeit überschritten wird, was beispielsweise anhand des Standorts, gelernter Standzeiten, der Uhrzeiten. Kalendereinträgen des Fahrzeugnutzers oder dergleichen abgeschätzt werden kann. Ist dies nicht der Fall, wird die Wasserstoffschutzzeit bis zum Wiederstart verlängert, gegebenenfalls auch durch eine höhere Anzahl von Wasserstoff-Nachdosierungen.

Ist zu erwarten dass die Wasserstoffschutzzeit überschritten wird, dann wird auf demselben Weg, auf dem bei einem bejahten Luft/Luft-Start fortgeschritten wird, geprüft, ob eine längere Standzeit vorgesehen ist. Ist dies der Fall wird die Batterie während der Fahrt geladen, insbesondere im vorletzten Abschnitt der Fahrt. Im letzten Fahrtabschnitt wird der elektrische Energiespeicher 24, z.B. eine Batterie, dann als einzige Quelle für die Leistung P des Fahrzeugs 1 genutzt und die passiv geschaltete Brennstoffzelle 3 wird aktiv gekühlt. Ist eine längere Standzeit nicht vorhersehbar, wird dieser Schritt eingespart. Nach dem Abstellen wird dann geprüft ob die Brennstoffzelle 3 beim Abstellen unterhalb des vorgegebenen Temperaturwerts für eine aktive Kathodenraumbelüftung ist. Ist dies der Fall muss keine weitere Kühlung erfolgen und der aktive Abbruch der Wasserstoffschutzzeit wird, gegebenenfalls nach einer vorgegebenen Anzahl von Wasserstoff-Nachdosierungen initiiert. Ist dies nicht der Fall wird die Brennstoffzelle vorher nochmals aktiv gekühlt, um für den dann erfolgenden aktiven Abbruch der Wasserstoffschutzzeit eine möglichst niedrige Temperatur der Brennstoffzelle 3 zu gewährleisten.

## Patentansprüche

1. Verfahren zum Abstellen eines Brennstoffzellensystems (2) mit wenigstens einer Brennstoffzelle (3), welche einen Anodenraum (10) und einen Kathodenraum (6) aufweist, wobei nach dem Abstellen Wasserstoff im Anodenraum (10) der Brennstoffzelle (3) verbleibt, um die Kohlenstoffkorrosion zu verhindern und eine Wasserstoffschutzzeit zu gewährleisten,
wobei bei weitgehend aufgebrauchtem Wasserstoff in dem Anodenraum (10) oder nach einer vorgegebenen Anzahl von Nachdosierungen von Wasserstoff zumindest in den Anodenraum (10) die Wasserstoffschutzzeit aktiv abgebrochen wird, indem der Kathodenraum (6) aktiv mit Luft beaufschlagt wird, wobei die Brennstoffzelle (3) aktiv gekühlt wird, bevor der Kathodenraum (6) aktiv mit Luft beaufschlagt wird, **dadurch gekennzeichnet, dass**
das Brennstoffzellensystem (2) in einem Fahrzeug (1) eingesetzt wird, wobei die aktive Abkühlung nach dem Abstellen des Fahrzeugs (1) erfolgt, wobei vor dem Beaufschlagen des Kathodenraums mit Luft die aktive Abkühlung solange erfolgt, bis eine vorgegebener Temperaturgrenzwert unterschritten und/oder eine vorgegebene Zeitspanne abgelaufen ist.

2. Verfahren nach Anspruch 1,
**dadurch gekennzeichnet, dass**
der vorgegebene Temperaturgrenzwert und/oder die Zeitspanne in Abhängigkeit der Umgebungstemperatur oder einer zu erwartenden Umgebungstemperatur zum Zeitpunkt der aktiven Belüftung vorgegeben werden.

3. Verfahren nach einem der Ansprüche 1 oder 2, wobei das Brennstoffzellensystem (2) in einem Fahrzeug (1) zusammen mit einem elektrischen Energiespeicher (24) eingesetzt wird,
**dadurch gekennzeichnet, dass**
die aktive Abkühlung vor dem Abstellen des Fahrzeugs (1) erfolgt, wenn dieses sich einem Zielort nähert, wobei das Fahrzeug (1) während des Abkühlens mit Leistung aus dem elektrischen Energiespeicher (24) versorgt wird.

4. Verfahren nach Anspruch 3,
**dadurch gekennzeichnet, dass**
eine Annäherung an einen Zielort über ein Navigationssystem erkannt wird, wobei programmierte oder erlernte Zielorte verwendet werden.

5. Verfahren nach Anspruch 3 oder 4,
**dadurch gekennzeichnet, dass**
bevor die aktive Abkühlung erfolgt der elektrische Energiespeicher (24) durch die Brennstoffzelle (3) geladen wird.

6. Verfahren nach einem der Ansprüche 1 bis 5,
**dadurch gekennzeichnet, dass**
die Anzahl der Nachdosierungen in Abhängigkeit eines Zählers, welcher die Anzahl an Starts ohne aktive Belüftung des Kathodenraums (6) zählt, vorgegeben wird.

7. Verfahren nach Anspruch 1 bis 6,
**dadurch gekennzeichnet, dass**
die Anzahl der Nachdosierungen in Abhängigkeit der Umgebungstemperatur oder anhand eines zu erwartenden zeitlichen Verlaufs der Umgebungstemperatur vorgegeben wird.

8. Verfahren nach einem der Ansprüche 1 bis 7,
**dadurch gekennzeichnet, dass**
die Anzahl der Nachdosierungen in Abhängigkeit der zu erwartenden Standzeit vorgegeben wird, wobei die zu erwartende Standzeit in Abhängigkeit des Zielorts, der Uhrzeit, des Datums und/oder unter Berücksichtigung von Kalendereinträgen des Fahrzeugnutzers abgeschätzt wird.

## Claims

1. A method for shutting down a fuel cell system (2) with at least one fuel cell (3) which has an anode chamber (10) and a cathode chamber (6), wherein hydrogen remains in the anode chamber (10) of the fuel cell (3) after the shutdown in order to prevent carbon corrosion and ensure a hydrogen protection time,
wherein, when the hydrogen in the anode chamber (10) has been largely used up or after a predetermined number of resupplies of hydrogen at least in the anode chamber (10), the hydrogen protection time is actively interrupted by the cathode chamber (6) being actively charged with air, wherein the fuel cell (3) is actively cooled before the cathode chamber (6) is actively charged with air, **characterized in that**
the fuel cell system (2) is used in a vehicle (1), wherein the active cooling takes place after the vehicle (1) has been shut down, wherein, before the cathode chamber is charged with air, the active cooling takes place until the temperature falls below a predetermined limit value and/or a predetermined period of time has elapsed.

2. The method according to claim 1,
**characterized in that**
the predetermined temperature limit value and/or the period of time are specified as a function of the ambient temperature or an ambient temperature to be expected at the time of active ventilation.

3. The method according to any one of claims 1 or 2, wherein the fuel cell system (2) is used in a vehicle (1) together with an electrical energy storage device (24),
**characterized in that**
the active cooling takes place before the vehicle (1) is shut down as it approaches a destination, wherein the vehicle (1) is supplied with power from the electrical energy storage device (24) during the cooling.

4. The method according to claim 3,
**characterized in that**
an approach to a destination is detected via a navigation system using programmed or learned destinations.

5. The method according to claim 3 or 4,
**characterized in that**
the electrical energy storage device (24) is charged by the fuel cell (3) before the active cooling takes place.

6. The method according to any one of claims 1 to 5,
**characterized in that**
the number of resupplies is specified as a function of a counter which counts the number of starts without active ventilation of the cathode chamber (6).

7. The method according to claim 1 to 6,
**characterized in that**
the number of resupplies is specified as a function of the ambient temperature or on the basis of an expected time curve of the ambient temperature.

8. The method according to any one of claims 1 to 7,
**characterized in that**
the number of resupplies is specified as a function of the expected downtime, wherein the expected downtime is estimated as a function of the destination, the time, the date, and/or taking into account the vehicle user's calendar entries.

## Revendications

1. Procédé de mise à l'arrêt d'un système de pile à combustible (2) avec au moins une pile à combustible (3) qui présente un espace d'anode (10) et un espace de cathode (6), dans lequel après la mise à l'arrêt, de l'hydrogène reste dans l'espace d'anode (10) de la pile à combustible (3) afin d'empêcher la corrosion de carbone et afin de garantir un temps de protection d'hydrogène,
dans lequel en cas d'hydrogène largement consommé dans l'espace d'anode (10) ou après un nombre prédéfini de post-dosages d'hydrogène au moins dans l'espace d'anode (10) le temps de protection d'hydrogène est activement interrompu, en ce que l'espace de cathode (6) est activement alimenté en air, dans lequel la pile à combustible (3) est activement refroidie avant que l'espace de cathode (6) ne soit activement alimenté en air,
**caractérisé en ce que**
le système de pile à combustible (2) est inséré dans un véhicule (1), dans lequel le refroidissement actif est effectué après la mise à l'arrêt du véhicule (1), dans lequel avant l'alimentation de l'espace de cathode en air, le refroidissement actif est effectué jusqu'à ce qu'une valeur limite de température prédéfinie reste en dessous d'une valeur seuil et/ou une durée prédéfinie soit écoulée.

2. Procédé selon la revendication 1,
**caractérisé en ce que**
la valeur limite de température prédéfinie et/ou la période sont prédéfinies en fonction de la température ambiante ou d'une température ambiante à attendre au moment de la ventilation active.

3. Procédé selon l'une quelconque des revendications 1 ou 2, dans lequel le système de pile à combustible (2) est inséré dans un véhicule (1) conjointement avec un accumulateur d'énergie (24) électrique,
**caractérisé en ce que**
le refroidissement actif est effectué avant la mise à l'arrêt du véhicule (1) lorsque celui-ci s'approche d'une destination, dans lequel le véhicule (1) est alimenté pendant le refroidissement en énergie de l'accumulateur d'énergie (24) électrique.

4. Procédé selon la revendication 3,
**caractérisé en ce que**
une approche d'une destination est reconnue par le biais d'un système de navigation, dans lequel des destinations programmées ou apprises sont utilisées.

5. Procédé selon la revendication 3 ou 4,
**caractérisé en ce que**
avant que le refroidissement actif ne soit effectué, l'accumulateur d'énergie (24) électrique est chargé par la pile à combustible (3).

6. Procédé selon l'une quelconque des revendications 1 à 5,
**caractérisé en ce que**
le nombre de post-dosages est prédéfini en fonction d'un compteur qui compte le nombre de démarrages sans ventilation active de l'espace de cathode (6).

7. Procédé selon la revendication 1 à 6,
**caractérisé en ce que**
le nombre de post-dosages est prédéfini en fonction de la température ambiante ou à l'aide d'une courbe temporelle à attendre de la température ambiante.

8. Procédé selon l'une quelconque des revendications 1 à 7,
**caractérisé en ce que**
le nombre de post-dosages est prédéfini en fonction du temps passé à l'arrêt à attendre, dans lequel le temps passé à l'arrêt à attendre est estimé en fonction de la destination, de l'heure, de la date et/ou en tenant compte d'entrées de calendrier de l'utilisateur du véhicule.
